## Europäisches Patentamt
## European Patent Office
## Office européen des brevets

(19)

(11) Veröffentlichungsnummer: **0 002 465**
**B1**

(12) **EUROPÄISCHE PATENTSCHRIFT**

(45) Veröffentlichungstag der Patentschrift: **30.09.81**

(21) Anmeldenummer: **78101470.9**

(22) Anmeldetag: **29.11.78**

(51) Int. Cl.³: **D 06 N 3/14, B 44 C 1/16, B 32 B 27/40, C 14 C 11/00, C 08 G 18/28**

(54) Verfahren zur lösungsmittelfreien Beschichtung von Substraten.

(30) Priorität: **08.12.77 DE 2754603**

(43) Veröffentlichungstag der Anmeldung:
**27.06.79 Patentblatt 79/13**

(45) Bekanntmachung des Hinweises auf die Patenterteilung:
**30.09.81 Patentblatt 81/39**

(84) Benannte Vertragsstaaten:
**DE FR GB**

(56) Entgegenhaltungen:
DE - A - 1 570 524
DE - A - 1 769 277
DE - A - 1 794 006
DE - A - 1 917 223
DE - A - 2 231 411
DE - A - 2 264 853
DE - B - 1 240 656
DE - B - 1 270 276
GB - A - 1 128 455
US - A - 3 656 987

(73) Patentinhaber: **BAYER AG**
**Zentralbereich Patente, Marken und Lizenzen**
**D-5090 Leverkusen 1, Bayerwerk (DE)**

(73) Patentinhaber: **Mobay Chemical Corporation**
**Penn Lincoln Parkway West**
**Pittsburgh, Pennsylvania 15205 (US)**

(72) Erfinder: **Weber, Karl-Arnold, Dr.**
**Saarstrasse 59**
**D-5090 Leverkusen (DE)**
Erfinder: **Walter, Kurt**
**Springfield Road P.O. Box 385**
**Union N.J. (US)**
Erfinder: **Prochaska, Helmuth**
**48 Ferguson Road**
**Warren N.J. 07060 (US)**

(74) Vertreter: **Müller, Heinz-Gerd, Dipl.-Ing. et al,**
**c/o Bayer AG Zentralbereich Patente Marken und Lizenzen**
**D-5090 Leverkusen 1, Bayerwerk (DE)**

Verfahren zur lösungsmittelfreien Beschichtung von Substraten

Die vorliegende Erfindung betrifft ein Verfahren zur lösungsmittelfreien Beschichtung von Substraten, insbesondere Leder, Spaltleder und Textilien, mit Hilfe einer Folie, welche aus einer hochschmelzenden Schicht, einer niedrigschmelzenden Schicht und einer zusätzlichen Zwischenschicht aufgebaut ist.

Für die Herstellung von Beschichtungen sind sowohl Direkt- als auch Umkehrbeschichtungsverfahren gebräuch. In Direktbeschichtungsverfahren wird die Beschichtung sofort auf den bleibenden Träger aufgetragen, bei Umkehrbeschichtungen wird die Beschichtung zunächst auf einen Trennträger aufgebracht und von diesem zu einem späteren Zeitpunkt auf den bleibenden Träger übertragen. Als Trennträger sind in der Praxis Trennpapiere, Trennläufer und Stahlbänder eingeführt. Zum Stand der Technik gehörende Auftragsverfahren für die Herstellung von Beschichtungen sind z.B. Rakeln, Sprühen, Gießen, Kalandern, Streuen oder Sieben. Insbesondere sind in diesem Zusammenhang neben den Gießverfahren die Rakelverfahren von Bedeutung.

Beschichtungen können in einem oder in mehreren Aufträgen aufgebracht werden. Im Einstrichverfahren arbeitet man z.B. im allgemeinen bei der Oberflächenverfestigung von Watte, der Noppenverfestigung von Teppichen und bei der Herstellung leichter, wasserdichter Textilien (Regenmäntel, leichte Planenstoffe). Meist wird jedoch bei der Herstellung von Beschichtungen zunächst auf das Substrat ein weicherer Haftstrich aufgebracht, der als Verdindung bzw. als Pufferschicht zwischen dem Substrat und einer meist härteren und kratzfesteren zweiten Schicht, dem sogenannten Deckstrich dient. Deck- und Haftstrich haben dabei in vielen Fällen verschiedene chemische Zusammensetzungen. In Frage kommen beispielsweise Kombinationen verschiedener Polyurethansysteme, Kombinationen aus Polyurethan und Polyacrylat, Polyurethan und PVC, etc. Der Aufbau von Beschichtungen in zwei oder mehreren Strichen hat den Vorteil, daß die Eingenschaften durch Variation der Schichtfolge, der Schichtdicke und ihrer chemischen Zusammensetzung gezielt auf die speziellen Verwendungszwecke des Fertigmaterials abgestimmt werden können.

Aufgrund ihrer großen Variationsbreite und des hohen allgemeinen Echtheitsniveaus werden für die Beschichtung von Textilien und Leder im allgemeinen bevorzugt Polyurethane eingesetzt. In Frage kommenhierfür z.B. die sogenannten "Zweikomponenten-Polyurethane". Es sind dies Reaktivsysteme, welche beispielsweise aus einem Isocyanatgruppen aufweisenden Voraddukt und einem geeigneten Kettenverlängerungsmittel (meist einem aromatischen Diamin) bestehen, welche getrennt oder gemeinsam, mit einem Lösungsmittel verdünnt, auf das zu beschichtende Substrat aufgegossen oder aufgesprüht werden.

Verfahren dieser Art werden beispielsweise in den deutschen Patentschriften 838 826, 872 268, der DAS 1 023 449, der DAS 1 240 656 (US—Patent 3 281 396) sowie insbesondere der DOS 1 570 524 (US—Patent 3 475 266) beschrieben.

Umgekehrt ist es selbstverständlich auch möglich, Zweikomponenten- Polyurethane aus einem niedermolekularen Polyisocyanat und einem relativ hochmolekularen Voraddukt aufzubauen, welches noch gegenüber Isocyanaten reaktive Gruppen aufweist. Ein derartiges Verfahren wird z.B. in der DOS 2 221 756 (US—Patent 3 904 796) beschrieben.

Im Gegensatz zu diesen seit längerem bekannten Zweikomponenten-Polyurethanen sind die sogenannten Einkomponenten-Polyurethane neuerer Stand der Technik. Diese bereits voll ausreagierten, hochmolekularen Produkte werden durch Umsetzung von Polyhydroxylverbindungen, in der Praxis vor allem Dihydroxypolyestern oder Dihydroxypolyäthern, im Gemisch mit Glykolen, vorzugsweise Äthylenglykol oder Butandiol, mit aromatischen Diisocyanaten, bevorzug 4,4'-Diphenylmethandiisocyanat, erhalten. Diese sowohl in der Schmelze als auch in Lösung herstellbaren, im wesentlichen linearen Polyurethane werden in Form von Lösungen bzw. Lösungsmittelgemischen eingesetzt, welche Dimethylformamid und/oder andere hochpolare Verbindungen enthalten. Ein Vorteil der Einkomponenten-Polyurethane ist ihre praktisch unbegrenzte Topfzeit. Neben den aus aromatischen Diisocyanaten aufgebauten sogenannten aromatischen Einkomponenten-Polyurethane gehören zum Stand der Technik auch die sogenannten aliphatischen Einkomponenten-Polyurethane; es handelt sich dabei um Polyurethanharnstoffe aus höhermolekularen Dihydroxyverbindungen, aliphatischen Diisocyanaten und aliphatischen Diaminen bzw. Bishydraziden, Bissemicarbaziden und Bis-Carbazinsäureestern als Kettenverlängerer. Diese aliphatischen Einkomponenten-Polyurethane werden aus Lösungsmittelgemischen, die neben aromatischen Kohlenwasserstoffen sekundäre oder primäre Alkohole enthalten, appliziert. In jüngster Zeit werden neben den bisher beschriebenen Polyurethansystemen auch wäßrige Polyurethandispersionen zur Beschichtung von Leder oder Textilien eingesetzt.

Allen bisher beschriebenen konventionellen Beschichtungsverfahren ist gemeinsam daß die Beschichtungsmittel in geloster oder pastöser Form auf das Substrat appliziert werden, worauf die Beschichtung durch Verdampfen des Lösungsmittels bzw. Dispergiermittels verfestigt wird. Diese Arbeitsweise hat — vor allem, wenn eine Beschichtung in mehreren Lagen aufgetragen wird — für den Verarbeiter den Nachteil, daß relativ aufwendige Beschichtungsapparaturen erforderlich sind, die aus mehreren Vorrichtungen zum gleichmäßen Auftragen der einzelnen Striche und aus mehreren Heizzonen zur Verfestigung der aufgetragenen Schichten bestehen. Darüber hinaus sind auch Anlagen erforderlich, in welchen aus Umwelschutzgründen das eingesetzte Lösungsmittel bzw. Lösungsmittelgemisch wieder gewonnen wird.

Zum Stand der Technik gehört auch die Laminierung von Substraten mit vorgefertigten Kunststoffolien. Der Verarbeiter bestreicht, besprüht oder pflatscht dabei in analoger Weise wie oben die Kunststoffolie mit einem geeigneten Klebstrich (z.B. Einkomponenten-Polyurethan; Polyurethan-Dispersion; Acrylat-Dispersion) und kaschiert darauf z.B. das textile Substrat. Nachteilig ist hierbei wieder die notwendige Mitverwendung von Lösungs- bzw. Dispergiermitteln, die nach der Kaschierung aus dem beschichteten Material entfernt werden müssen.

In der DE—OS 1 917 233 wird ein Anpressen einer gegebenenfalls mehrschichtigen Folie unter Druck und Wärme (z.B. Heizwalzen bei 130°C) auf eine bahnförmige, gegebenenfalls mehrschichtige, jedoch in der Oberfläche mikroporöse Schicht und anschließendes Abziehen der temporären Trägerfolie beschrieben. Die mehrschichtige Folie soll dabei abgestuft thermoplastischen Charakter zeigen. Keine der vielen möglichen Schichten besteht dabei aus Polyurethan und es ist auch keine Schaumschicht in den Laminaten erwähnt. Es ist auch nich möglich, etwa nach diesem Verfahren PVC-Schaumstoff-Zwischenschichten heiß zu verpresen, da diese bei einem Erweichungsbereich ab etwa 80°C und bei den notwendigen Kaschiertemperaturen (z.B. 130°C) und Druck ihren Schaumstoffcharakter einbüßen würden.

In der DE—AS 1 749 006 wird
1) ein Verfahren zur Herstellung von Schaumkunstleder beschrieben, wo ein schäumfähiges Poly-urethan-Reaktionsgemisch direkt auf ein textiles Substrat aufgetragen, ausgeheizt und gegebenenfalls mit einem Deckstrich versehen wird.

Eine andere Ausführungsform beschreibt:
2) Eine Art Umkehrverfahren, bei dem man auf
   a) ein Trennpapier
   b) einen Deckstrich eines B/S/AN—Dispersionsbinders
   c) eine Polyurethanelastomerschicht
   d) einen Polyurethan-Reaktivschaumstoff aufträgt, jeweils trocknet, bzw. zur Schaumstofftreibreaktion auf 175°C erhitzt und diesen Verbund mit
   e) einem Aufstrich eines lösungsmittelhaltigen Klebestrichs versieht, mit dem textilen Trägermaterial verbindet und trocknet.

Aufgabe der vorliegenden erfindung ist es nun, eine einfaches, lösungsmittelfreies Beschichtungsverfahren zur Verfügung zu stellen, welches gleichermaßen für textile Substrate, Vliesstoffe, Leder und Spaltleder geeignet ist und mit den üblichen Maschinen eines Verarbeiterbetriebes ausgeführt werden kann. Die Beschichtung soll abriebfest, weich und auf dem Substrat ganzflächig gleichmäßig haftend sein.

Erfindungsgemäß wird diese Aufgabe gelöst indem eine mehrschichtige Folie, bestehend aus einer relativ hochschmelzenden Deckschicht, einer Schaumzwischenschicht und einer relativ niedrig schmelzenden Klebschicht, über den Erweichungspunkt der Klebschicht erwärmt und danach auf das zu beschichtende Substrat kaschiert wird.

Es war notwendig, eine exakte Anpassung einer mehrschichtigen Folie hinsichtlich der Zahl, ihrer Zusammensetzung, der Abstimmung der Eigenschaften der einzelnen Schichten und ihres Verhaltens in einer thermischen Laminierungsstufe vorzunehmen — besonders, da man diese thermische Laminierung auch in relativ "rauhen" Methoden (z.B. Flammkaschierung) anwendbar machen wollte.

Gegenstand der Erfindung ist somit ein Verfahren zur lösungsmittelfreien Beschichtung und/oder Kaschierung von textilen Substraten, Vliesstoffen, Leder oder Spaltleder, wobei man in einer mehrschichtigen Folie, aufgebaut aus
a) einer Klebschicht,
b) einer Zwischenschicht,
c) einer gegebenenfalls gefärbten Deckschicht mit einem Erweichungspunkt, welcher mindestens 15°C über jenem der Klebschicht liegt, sowie gegebenenfalls
d) einem Einwegtrennpapier,
die Klebschicht auf ihren Erweichungspunkt erwärmt und danach die mehrschichtige Folie mit dem zu beschichtenden Substrat kaschiert, wobei die erweichte Klebschicht dem Substrat zugewandt ist,
dadurch gekennzeichnet, daß in der mehrschichtigen Folie
die Klebschicht a) eine Polyurethanschicht mit einem Gewicht von 20 bis 100 g/m², vorzugsweise 30 bis 60 g/m², und einem Erweichungspunkt zwischen 80 und 200°C, vorzugsweise zwischen 100 und 160°C.
die Zwischenschicht b) eine direkt auf der Deckschicht hergestellte Polyurethan-Schaumschicht mit einer Dicke zwischen 0,2 und 0,5 mm, einem Raumgewicht zwischen 500 und 800 g/l und einem Erweichungspunkt, welcher mindestens 15°C über jenem der Klebeschicht liegt und
dier Deckschicht c) eine Polyurethanschicht mit einem Gewicht von 20 bis 300 g/m² ist.

Gemäß DE—AS 1 016 680 und US—Patent 2 957 793 werden Schaumstoffe mit Textilien kaschiert, indem die Oberfläche des Schaumstoffs durch Einwirkung einer Flamme bzw.

durch ein Infrarotfeld aufgeschmolzen und dann das Textil auf diese klebrige Oberfläche aufgebracht wird. Diese verwendeten Schaumstoffolien sind jedoch relativ dick und weisen keine Deckschicht auf. Außerdem ist die Haftfestigkeit derartiger Beschichtungen gering und die Schäume sind grobporig, was sich auf den Narbenwurf des fertigen Produktes negativ auswirkt.

Gemäß einem eigenen älteren Vorschlag (DE—OS 2 651 392) werden textile Flächengebilde bei einer Temperatur von 160 bis 350°C mit einer bei dieser Temperatur erweichenden, mit wasserunlöslichen Farbstoffen gefärbten und/oder bedruckten Schaumstoffolie verpreßt. In diesem Falle dient die Schaumstoffolie jedoch nicht zur Beschichtung des Textils, sondern nur als Farbstoffüberträger; das Verpressen erfolgt unter solchen Bedingungen, daß das Polyurethan praktisch vollständig in das textile Basismaterial eindringt.

Von N. Münch wird in "Das Leder" 22. Jahrgang, Nr. 12, (Dezember 1971), Seite 269, ein Verfahren zur Zurichtung von Leder beschrieben, in welchem ein dünner Polyurethan-Finish (3 bis 5 $\mu$) mittels eines Papiers auf Leder aufgetragen wird. Es handelt sich hierbei jedoch um keine Beschichtung mittels einer mehrschichtig aufgebauten Folie wie im erfindungsgemäßen Verfahren, sondern um eine bloße Zurichtung von Leder

Zum Stand der Technik gehören auch Verfahren zur Heißversiegelung von Textilien, wobei ein textiles Substrat mit einem niedrigschmelzenden Polyurethan oder anderen Polymeren wie z.B. einem Polyester, Polyamid oder PVC in Form eines Pulvers, einer Suspension oder Dispersion oberflächlich imprägniert und danach mit einem zweiten Textilmaterial verpreßt wird. Das Polyurethan dient dabei jedoch nicht zur Beschichtung eines Substrates sondern nur zur Verklebung verschiedener Textilbahnen.

Die Klebschicht (a) der erfindungsgemäß zur Kaschierung einzusetzenden mehrschichtigen Folien ist vorzugsweise homogen, besitzt im allgemeinen ein Gewicht zwischen 20 und 100 g pro m², vorzugsweise zwischen 30 und 60 g pro m², und beginnt zwischen da. 80 und 200°C, vorzugsweise zwischen 100 und 160°C, zu erweichen, d.h. klebrig zu werden.

Vorzugsweise besteht der Klebstrich aus einer Polyurethanschicht, welche vorzugsweise aus der Lösung eines handelsüblichen Einkomponenten-Polyurethans oder auch aus einer wäßrigen Polyurethandispersion hergestellt wurde Gegebenenfalls kann der Klebstrich aber auch aus einem wäßrigen Polymerlatex mit dem oben beschriebenen Erweichungsbereich hergestellt worden sein, beispielsweise einem solchen auf Basis von Acrylsäurebutylester und Styrol, Acrylsäurebutylester und Vinylacetat oder Butadien/Vinylchlorid/Vinylacetat).

Polyurethanschaumfolien haben im allgemeinen einen zu hohen Erweichungspunkt und sind daher für die Klebschicht meist nicht geeignet. Es ist allerdings möglich, bei den unten näher beschriebenen Schlag- und Reaktivschaumsystemen die Rezepturen so zu wählen, daß Schäume mit den gewünschten niedrigen Erweichungspunkten entstehen.

Erfindungsgemäß wird zwischen Deckschicht und Klebschicht eine Füll- oder Zwischenschicht eingebracht, welche verhindern soll, daß Unebenheiten des Substrats (insbesondere trifft dies für Spaltleder zu) an der Oberfläche sichtbar werden. Im allgemeinen ist es erforderlich, daß die Beschichtung insgesamt eine Dicke von mehr als ca. 0,25 mm aufweist, damit diese unerwunschten Oberflächeneffekte nicht auftreten. Eine derartige Schichtdicke jedoch nur aus dem Material von Kleb- bzw. Deckstrich aufzubauen, wäre unökonomisch und es würde ein für die Schuh- oder Bekleidungsindustrie zu steifes Material resultieren; darüber hinaus verbessert im allgemeinen eine Zwischenschicht — insbesondere eine Schaumzwischenschicht — Griff und Fülle des beschriebenen Textils bzw. Leders.

Grundsätzlich kommen für die Füllschicht beliebige poröse oder homogene Kunstoffolien aber auch Gewebe oder Gewirke (insbesondere zur Verbesserung der mechanischen Eigenschaften von minderwertigem Spaltleder) in Frage; bevorzugt sind Zwischenschichten auf Basis von Polyurethanen oder PVC. Wie bereits oben erwähnt, ist es besonders bevorzugt, Schaumzwischenschichten einzusetzen, um den Griff und die Fülle des beschichteten Materials zu verbessern. Die Schaumschicht sollte zu diesem Zweck so feinporig und dünn wie möglich sein. Vorzugsweise weist sie eine Schichtdicke von etwa 0,2 bis 0,5 mm und ein Raumgewicht von 500 bis 800 g pro l, besonders bevorzugt etwa 600 g pro l, auf. Geeignet sind z.B. mikropöröse Kunststoffolien, wie sie durch Koagulation von Polymerlösungen, beispielsweise nach den Verfahren der US—Patente 3 000 757, 3 100 721 und 3 208 875 sowie der deutschen Patentschriften 1 769 277 und 1 270 276 hergestellt werden können. Folien aus vorgefertigten Polyurethanschaumstoffen sind im allgemeinen weniger bevorzugt, da sich ein fertiger Schaumstoff nur schwer in die erforderlichen geringen Schichtdicke und zerschneiden läßt. Erfindungsgemäß sind daher solche Polyurethanschaum-Zwischenschichten bevorzugt, welche direkt auf der Deckschicht hergestellt werden können. Es sind dies einerseits Polyurethanschäume, wie sie durch Einrühren von Luft in wäßrige Dispersionen von ionischen oder nichtionischen Polyurethanen und anschließendes Auftrocknen hergestellt werden können. Verfahren dieser Art werden in den deutschen Offenlegungsschriften 2 231 411 (US—Patent 3 989 870) und 2 343 294 (US—Patent 3 989 869) beschrieben. Erfindungsgemäß bevorzugt sind auch sogenannte Reaktivschäume, wie sie beispielsweise in den deutschen Offenlegungsschriften 1 444 170 (US—Patent 3 262 805)

und 1 794 006 (kanadisches Patent 758 229) beschrieben werden. Man streicht hierbei auf die Deckschicht ein reaktives Gemisch aus einer höhermolekularen Polyhydroxylverbindung, einem Polyisocyanat und einer Verbindung auf, welche beim Erhitzen ein Gas abspaltet, und führt danach das Material durch einen Trockenkanal, wobei die Mischung ausreagiert und gleichzeitig die Schicht aufgrund der Zersetzung des Treibmittels aufschäumt.

Der Erweichungspunkt der Zwischenschicht sollte ebenfalls mindestens etwa 15°C über jenem der Klebschicht liegen; selbstverständlich kann der Schmelzpunkt der Zwischenschicht auch höher liegen als jener der Deckschicht.

Die Deckschicht (c) der erfindungsgemäß zu verwendenden Mehrschichtfolie hat, wie bereits erwähnt, einen Erweichungspunkt, welcher mindestens etwa 15°C, vorzugsweise mehr als 25°C, besonders bevorzugt mehr als 40°C, über jenem der Klebschicht liegt. Ihr Gewicht liegt im allgemeinen zwischen etwa 20 und 300 g pro m², vorzugsweise zwischen 30 und 200 g pro m². Für die Herstellung der Deckschicht, die vorzugsweise aus Polyurethan besteht, kommen die handelsüblichen Ein- und Zweikomponenten-Polyurethane in Betracht, wie sie in der Beschichtungsindustrie für die Herstellung von Textil- und Lederbeschichtungen eingesetzt werden.

Die erfindungsgemäß zu verwendenden Mehrschichtfolien können auf normalen Beschichtungsanlagen, welche mindestens zwei Streichköpfe aufweisen sollten, vorzugsweise nach dem Umkehrverfahren hergestellt werden: Zunächst wird auf einen Trennträger, vorzugsweise ein Trennpapier mit gegebenenfalls strukturierter Oberfläche, die Deckchicht durch Gießen, Sprühen oder Rakeln aufgetragen und anschließend in einem Heizkanal ausgehärtet (falls als Zwischenschicht eine vorgefertigte homogene oder gesachäumte Kunststoffolie eingesetz werden soll, dann ist es zweckmäßig, diese auf die Deckschicht aufzulegen, solange sie noch klebig ist). Anschließend wird gegebenenfalls ein Polyurethan-Reaktivschaum oder Polyurethan-Schlagschaum als Zwischenschicht aufgetragen und in einem neuerlichen Durchgang durch einen Trockenkanal ausgehärtet. Als letzte Schicht wird der Klebstrich aufgebracht und anschließend in einem Trockenkanal ausgehärtet.

Erfindungsgemäß wird das so hergestellte mehrschichtige Verbundmaterial vorzugsweise nicht vom Trennpapier abgelöst, sondern zusammen mit diesem an den Endverarbeiter versandt. Dies hat einerseits den Vorteil, daß die Verbundfolie beim Transport nicht beschädigt wird und gibt andererseits dem Endverarbeiter die Möglichkeit, beim Kaschieren mit dem zu beschichtenden Substrat die Verbundfolie mit dem Trennpapier gemeinsam einzusetzen, wodurch eine Verformung bzw. eine Zerstörung des Deckstrichs beim Verpressen vermieden wird.

Falls als Deckschicht ein nichtthermoplastisches Harz verwendet wird (z.B. ein voll ausreagiertes und vernetztes Zweikomponenten-Polyurethan), dann ist die Schicht allerdings meist stabil genug, so daß auf das Trennpapier auch verzichtet werden kann.

Das erfindungsgemäße Verfahren kann so ausgeführt werden, daß der Klebstrich in einem Infrarotfeld oder in einer Flammkaschierungsanlage, wie sie in der eingangs zitierten Literatur beschrieben wird, über seinen Erweichungspunkt erhizt wird, worauf man das zu beschichtende Substrat (Textil, Vliesstoff, Leder oder Spaltleder) zukaschiert. Erfindungsgemäß bevorzugt ist jedoch eine einfache Kaschierung über beheizte Walzen oder Platten, beispielsweise in Bügelpressen oder Prägepressen, welche eine Temperatur aufweisen, die mindestens etwa 10°C über dem Erweichungspunkt des Haftstrichs, jedoch möglichst unterhalb des Erweichungspunktes der Deckschicht liegt. Der Anpreßdruck liegt dabei im allgemeinen zwischen etwa 2 und 20 kp pro cm², die Kontaktzeit vorzugsweise zwischen etwa 10 und 15 Sekunden. Beim Kaschieren von Leder bzw. Spaltleder in Bügel- und Prägepressen ist darauf zu achten, daß nur die obere (der Verbundfolie zugewandte) Platte beheizt wird, damit das Leder nicht durch Hitzeeinwirkung zerstört wird.

Um die Haftung der Beschichtung auf Leder bzw. Spaltleder zu verbessern, wird dessen Oberfläche erfindungsgemäß bevorzugt vor dem Kaschieren mit einer wäßrigen Polyurethan-Dispersion vorbehandelt. Im allgemeinen imprägniert man dabei das Leder bzw. Spaltleder mit ca. 5—10 g/m² Festsubstanz einer ca. 40%iger PU—Dispersion. Für diese Vorbehandlung können z.B. alle an sich bekannten handelsüblichen Lederimpreägnier- und Zurichtmittel auf Basis wäßriger ionischer oder nichtionischer Polyurethan-Dispersionen eingesetzt werden. Für die Vorimprägnierung eignen sich gegebenenfalls auch andere übliche Dispersionen, z.B. auf Basis von Acrylsäureestern, Methacrylsäureestern und deren Mischungen sowie Butadienmischpolymerisaten.

Beispiel 1
a) Herstellung einer zweischichtigen Folie: (nicht erfindungsgemäß)

Auf einer Beschichtungsanlage, die nach dem Umkehrverfahren arbeitet, wird auf einem Umkehrpapier des Typs Transkote VEM die 30 Gew.-%ige Lösung eines Einkomponentenpolyurethans in einem Gemisch aus DMF, Toluol und MEK mit einem Rakelmesser aufgestrichen. Die Höhe des Rakelmessers wird dabei so bemessen, daß die Auflage an Polyurethan-Feststoff 40 g pro m² beträgt. Dieser Deckstrich wird im Verlauf von 8 Minuten in einem Trockenkanal mit einer von 80°C auf 150°C ansteigenden Temperatur getrocknet. Mittels eines zweiten Streichkopfs wird darauf in einer Auflagemenge von 50 g Polyurethan-

Feststoff pro m² ein Klebstrich bestehend aus der 30 Gew.-%igen Lösung eines thermoplastischen Polyurethans in DMF/Toluol/MEK aufgerakelt. In einem zweiten Durchlauf durch den Trockenkanal wird dieser Klebstrich getrocknet. Danach wird das aus Deck- und Klebestrich bestehende Verbundmaterial zusammen mit dem Umkehrpapier aufgewickelt.

Das Polyurethan des Deckstrichs wurde durch Umsetzung eines Isocyanatgruppen aufweisenden Präpolymeren aus 1 Mol eines Gemisches aus 1,6-Hexandiol-polycarbonat (Molekulargewicht 2000) und einem 1,4-Butandiol/Adipinsäure-polyester (Molekulargewicht 2000) und 4 Molen 4,4'-Diphenylmethandiisocyanat mit 3 Molen 1,4-Butandiol hergestellt. Das Polyurethan hat einen Erweichungsbereich von ca. 170—180°C.

Das Polyurethan des Klebstrichs wird durch Umsetzung eines Gemisches aus 1 Mol 1,6-Hexandiol/Adipinsäure-polyester (Molekulargewicht 2000), 0,5 Molen 1,4-Butandiol, 0,5 Molen 1,6-Hexandiol und 2 Molen 4,4'-Diphenylmethandiisocyanat in der Schmelze hergestellt. Sein Erweichungspunkt liegt zwischen ca. 90 und 100°C.

b) Verfahren zur Thermokaschierung:
Mit Hilfe einer Bügelpresse des Typs XV 06 der Firma Kannengießer, BRD, wird die obige Zweischichtfolie mit einem ungerauhten Baumwollgewebe thermokaschiert. Man legt dabei das Substrat auf den Bügeltisch, darauf die Zweischichtfolie, wobei die Seite mit dem Klebstrich dem Substrat zugewandt ist. Daraufhin wird 10 bis 15 Sekunden lang unter einem Druck von 4 bis 5 kp pro cm² bei 150°C die Folie mit dem Substrat verpreßt. Nach dem Abkühlen des Substrats wird das Umkehrpapier abgezogen. Man erhält ein für die Herstellung von Täschnereiartikeln geeignetes Kunstleder mit angenehmem, glattem Griff.

Beispiel 2
a) Herstellung einer dreischichtigen Folie:
Zunächst wird, wie in Beispiel 1 a beschrieben, auf Umkehrpapier ein Deckstrich erzeugt. Auf den verfestigten Deckstrich wird in einer Auflagemenge von 140 g Polyurethan-Feststoff pro m² ein schäumfähiges Reaktivgemisch aufgetragen. Danach wird das Laminat 4 Minuten in einen Trockenkanal von 170°C eingeführt, wobei die Reaktionsmischung aufschäumt und aushärtet. Anschließend wird, wie in Beispiel 1a beschrieben, der Klebstrich aufgerakelt.

Das schäumfähige Reaktivgemisch besteht aus

a) 140 Gew.-Teilen an dimerisiertem 2,4-Toluylendiisocyanat und
b) 1000 Gew.-Teilen einer Polyolkomponente, bestehend aus 60 Gew.- eines Polypropylenglykols mit einer OH—Zahl von 27,
15 Gew.-% eines schwach verzweigten, Urethangruppen aufweisenden Polypropylenoxids (OH—Zahl 32)
6 Gew.-% eines endständige Hydroxylgruppen aufweisenden Epoxidharzes aus Bisphenol A und Epichlorhydrin
15 Gew.-% eines anorganischen Weißpigments
2 Gew.-% eines Treibmittels auf Basis von Azodicarbonsäureamid
1 Gew.-% eines Cd/Zn—Mischsalzes von längerkettigen Fettsäuren und
1 Gew.-% eines Siliconöls
Der Erweichungspunkt des daraus hergestellten Schaums liegt bei ca. 220°C.

b) Erfindungsgemäßes Verfahren:
Die dreischichtige Folie wird, wie in Beispiel 1b beschrieben, mit einem Spaltleder kaschiert, wobei jedoch der Bügeltisch der Bügelpresse nicht geheizt wird.

Es entsteht ein für die Herstellung von Schuhobermaterial geeignetes Kunstleder mit fülligem, angenehmem Griff.

Beispiel 3
Beispiel 2 wird wiederholt, jedoch wird die dreischichtige Folie, wie in Beispiel 1 b beschrieben, mit einem genadelten Vlies auf Basis von Baumwollfasern verbügelt. Es entsteht ein für die Herstellung von Schuhobermaterial und Täschnereiartikeln geeignetes Kunstleder mit fülligem, angenehmem Griff.

Beispiel 4
a) Herstellung eines dreischichtigen Verbundmaterials:
Beispiel 2a wird wiederholt, jedoch unter Verwendung eines Deckstrichs auf Basis der 30 %igen Lösung eines cycloaliphatischen Polyurethanharnstoffs in einem Gemisch aus DMF, Toluol und Isopropanol. Der Polyurethanharnstoff wird durch Umsetzung eines Präpolymeren aus 120 Gew.-Teilen 1,4-Butandiol/Adipinsäure-polyester (Molekulargewicht 2000) und 30 Gew.-Teilen Isophorondiisocyanat mit 6 Gew.-Teilen Isophorondiamin als Kettenverlängerungsmittel hergestellt. Sein Erweichungspunkt liegt bei ca. 210°C; die Auflagemenge beträgt 40 g Polyurethanfeststoff pro m². Als Klebstrich wird die 25 %ige Lösung eines aromatischen Polyurethans in einem Gemisch aus DMF, Toluol und MEK verwendet. Es wird durch Umsetzung von 30 Gew.-Teilen eines Polyesters aus Adipinsäure, Hexandiol und Neopentylglykol (Molekulargewicht 2000) mit 10 Gew.-Teilen 4,4'-Diphenylmethandiisocyanat hergestellt Erweichungsbereich: 100 bis 130°C; Auflagemenge: 50 g Polyurethanfeststoff pro m².

b) Erfindungsgemäßes Verfahren:
Die dreischichtige Verbundfolie wird mit der Klebschicht nach unten mit einer Geschwindigkeit von 3 m pro Minute durch ein 4 m langes Infrarotfeld, bestehend aus 12 Heizstaben (Leistung pro Stab: 2 kW) geführt, wobei der Abstand zu den Heizstäben 15 cm beträgt. Unmittelbar anschließend wird ein genadeltes Baumwollvlies zukaschiert. Es entsteht ein für die Herstellung von Schuhobermaterial geeignetes Kunstleder mit fülligem, angenehmem Griff.

**Beispiel 5**
a) Herstellung einer dreischichtigen Folie:
Aus dem Deckstrich von Beispiel 4a, der Zwischenschicht von Beispiel 2a und der Klebschicht aus Beispiel 1a wird nach der allgemeinen Arbeitsweise von Beispiel 2a ein dreischichtiges Verbundmaterial hergestellt.

b) Erfindungsgemäßes Verfahren:
Das dreischichtige Verbundmaterial wird auf einer Flammkaschieranlage der Firma PLA—MA Ltd., Vegesund/Norwegen mit einer solchen Geschwindigkeit über eine Gasflamme geführt, daß der Klebstrich nicht verbrannt sondern nur angeschmolzen wird. Unmittelbar anschließend wird ein genadeltes Baumwollvlies zukaschiert. Es entsteht ein für die Herstellung von Schuhobermaterial geeignetes Kunstleder mit fülligem, angenehmem Griff.

**Beispiel 6**
a) Herstellung einer dreischichtigen Folie:
Auf das Umkehrpapier wird mittels einer hin und her bewegten Pistolenspritzmaschine ein in Toluol gelöstes reaktives Gemisch aus m-Toluylendiamin und einem Isocyanatgruppen aufweisenden Präpolymeren aus 120 Gew.-Teilen eines Adipinsäuse-1,6-hexandiol-neopentylglykolpolyesters (Molgewicht 1700) und 25 Gew.-Teilen 2,4-Toluylendiisocyanat (NCO/NH = 1,04) aufgesprüht. Die versprühte Masse verläuft filmartig und beginnt nach etwa 1 Minute, vom Zeitpunkt des Aufsprühens an gerechnet, abzubinden. Nach Durchlaufen eines auf 80°C beheizten Trockenkanals werden nach 8 Minuten, vom Zeitpunkt des Aufsprühens an gerechnet, auf die ausgehärtete Deckschicht nach der Arbeitsweise von Beispiel 2a Zwischenschicht und Klebschicht aufgebracht.
Der Erweichungspunkt der Deckschicht liegt bei ca. 220 bis 230°C.

b) Erfindungsgemäßes Verfahren:
Die dreischichtige Folie wird wie in Beispiel 2b beschrieben mit einem Spaltleder verbügelt. Es entsteht ein für die Herstellung von Schuhobermaterial geeignetes Kunstleder mit etwas härterem Griff.

**Patentansprüche**

1. Verfahren zur lösungsmittelfreien Beschichtung und/oder Kaschierung von textilen Substraten, Vliesstoffen, Leder oder Spaltleder, wobei man in einer mehrschichtigen Folie, aufgebaut aus

a) einer Klebschicht,
b) einer Zwischenschicht,
c) einer gegebenenfalls gefärbten Deckschicht mit einem Erweichungspunkt, welcher mindestens 15°C über jenem der Klebschicht liegt, sowie gegebenenfalls
d) einem Einweg-Trennpapier,
die Zwischenschicht b) eine direkt auf der Deckschicht hergestellte Polyurethan- mit dem zu beschichtenden Substrat kaschiert, wobei die erweichte Klebschicht dem Substrat zugewandt ist, dadurch gekennzeichnet, daß in der mehrschichtigen Folie
die Klebschicht a) eine Polyurethanschicht mit einem Gewicht von 20 bis 100 g/m² und einem Erweichungspunkt zwischen 80 und 200°C
die Zwischenschicht b) eine direkt auf der Deckschicht hergestellte Polyurethan-Schaumschicht mit einer Dicke zwischen 0,2 und 0,5 mm, einem Raumgewicht zwischen 500 und 800 g/l und einem Erweichungspunkt, welcher mindestens 15°C über jenem der Klebschicht liegt, und
die Deckschicht c) eine Polyurethanschicht mit einem Gewicht von 20 bis 300 g/m² ist.

2. Verfahren nach Anspruch 1, dadurch gekennzeichnet, daß als direkt auf der Deckschicht hergestellte Polyurethan-Schaumstoffschichten durch Einschlagen von Luft in Polyurethandispersionen erhaltene Schaumstoffe oder durch Zusatz von Treibmitteln entstehende Polyurethan-Reaktivschaumstoffe verwendet werden.

3. Verfahren zum Kaschieren von Leder- und Spaltleder nach Anspruch 1 und 2, dadurch gekennzeichnet, daß das Leder-Substrat mit einer wäßrigen, ionischen oder nicht-ionischen Polyurethan-Dispersion oder Dispersionen auf Basis von Acrylsäureestern, Methacrylsäureestern und deren Mischungen, sowie Butadienmischpolymerisaten vorbehandelt wird.

**Revendications**

1. Procédé pour revêtir et/ou doubler sans utilisation de solvants des supports textiles, des étoffes non tissées, du cuir ou du cuir refendu dans lequel, partant d'une feuille à plusieurs couches constituée de:
a) une couche adhésive,
b) une couche intermédiaire,
c) une couche de couverture éventuellement colorée et qui présente un point de ramollissement supérieur d'au moins 15°C à celui de la couche adhésive, et le cas échéant,
d) un papier séparable à jeter après utilisation,
on chauffe la couche adhésive à son point de ramollissement puis on applique le support à revêtir en doublage sur la feuille à plusieurs couches avec la couche adhésive ramollie qui fait face au support, le procédé se caractérisant en ce que, dans la feuille à plusieurs couches:
la couche adhésive a) est une couche de polyuréthanne au poids de 20 à 100 g/m² présentant un point de ramollissement de 80 à 200°C,

la couche intermédiaire b) est une couche de mousse de polyuréthanne préparée directement sur la couche de couverture, à une épaisseur de 0,2 à 0,5 mm, avec une densité apparente de 500 à 800 g/litre et un point de ramollissement qui se situe à au moins 15°C au-dessus de celui de la couche adhésive, et

la couche de couverture c) est une couche de polyuréthanne au poids de 20 à 300 g/m².

2. Procédé selon la revendication 1, caractérisé en ce que l'on utilise en tant que couches de mousses de polyuréthannes préparées directement sur la couche de couverture, des mousses obtenues par introduction d'air par battage dans des dispersions de polyuréthannes ou bien des mousses réactives de polyuréthanne formées par addition d'agents gonflants.

3. Procédé selon la revendication 1 ou 2, pour doubler le cuir et le cuir refendu, caractérisé en ce que l'on traite au préalable le support de cuir par une dispersion aqueuse de polyuréthanne ionique ou non ionique ou des dispersions à base d'esters acryliques, d'esters méthacryliques et leurs mélanges, ou de copolymères du butadiène.

## Claims

1. Process for the solvent-free coating and/or lamination of textile substrates, non-wovens, leather or split leather, wherein a multilayer foil comprising

a) an adhesive layer,
b) an interlayer,
c) an optionally coloured suface layer with a softening point which is at least 15°C above that of the adhesive layer, and optionally
d) a disposable release paper,

the adhesive layer is heated to its softening point and then the multi-layer film is laminated with the substrate to be coated, the softened adhesive layer facing the substrate, characterised in that in the multi-layer film:

the adhesive layer a) is a polyurethane layer having a weight of 20 to 100 g/m² and a softening point between 80 and 200°C,

the interlayer b) is a polyurethane foam layer produced directly on the surface layer and having a thickness of between 0.2 and 0.5 mm, a unit weight of between 500 and 800 g/l and a softening point which is at least 15°C above that of the adhesive layer, and

the surface layer c) is a polyurethane layer having a weight of 20 to 300g/m².

2. Process according to claim 1, characterised in that foams obtained by churning air into polyurethane dispersions or polyurethane reactive foams formed by the addition of foaming agents are used as the polyurethane foam layers produced directly on the surface layer.

3. Process for laminating leather and split leather according to claim 1 and 2, characterised in that the leather substrate is pretreated with an aqueous, ionic or non-ionic polyurethane dispersion or dispersions based on acrylic acid esters, methacrylic acid esters and mixtures thereof, or on butadiene copolymers.